# EUROPEAN PATENT APPLICATION

(11) **EP 2 595 354 A1**
(43) Date of publication of application: **22.05.2013**
(21) Application number: 11306514.8
(22) Date of filing: 18.11.2011
(51) Int. Cl.: H04L 29/06

(54) **Multimedia exchange system for exchanging multimedia, a related method and a related multimedia exchange server**

(71) Applicant: Alcatel Lucent, 75007 Paris (FR)
(72) Inventor: Van Winkel, Jan, 2000 Antwerp (BE); Fadili, Moulay, 95000 Cergy (FR); Casas-Sanchez, Miguel, Antwerpen 2018 (BE)
(74) Representative: ALU Antw Patent Attorneys

(57) **Abstract**

The present invention relates to a Multimedia exchange system for exchanging multimedia between multimedia clients of a plurality of multimedia clients via a multimedia exchange server. Each multimedia client of a plurality of multimedia clients being coupled to the multimedia server where each multimedia client of the plurality of multimedia clients generates a multimedia output stream, The Multimedia exchange system further comprises a video scene composition part that is adapted to generate a video scene composition by aggregating each multimedia output stream from a plurality of multimedia output streams, each multimedia output stream of said plurality of output streams being generated by a corresponding media client of said plurality of media clients. The multimedia system further comprises a multimedia analysis part that is adapted to analyze each multimedia output stream of the plurality of multimedia output streams for detecting an event in each said multimedia output stream and adapted to assign a high interest level to said multimedia output stream of said plurality of multimedia output streams in case of occurrence of said event in said multimedia output stream. The video scene composition part further is adapted to modify the relevance of each stream of the plurality of streams included in the scene composition based on the interest level assigned to each multimedia output stream.

## Description

The present invention relates to a multimedia exchange system for exchanging multimedia as described in the preamble of claim 1, a related Method as described in the preamble of claim 7, a related multimedia exchange server as described in the preamble of claim 8.

Such Multimedia exchange system for exchanging multimedia, e.g. a video conferencing system being well known in the art, usually comprises a plurality of video conferencing clients, called multimedia exchange clients wherein each video conferencing client of the plurality video conferencing clients generates an output multimedia stream. Typically such a video conferencing client may be an internet connected computer terminal with keyboard mouse, additional camera included in the client device or connected to the client device, microphone and speakers. Alternatively such stream may include prerecorded video with or without audio, or a fixed image stream with or without audio, or an image being animated based on user audio/control inputs like avatars.

Each of the output multimedia streams includes video - and/or audio information generated by the client where the video information typically includes the video stream presenting the user, recorded by a camera user with additional speech.

Each of the generated output multimedia streams generated by the respective clients is forwarded towards a video conferencing server, which video conferencing server is connected via a communications network to each of multimedia client of the plurality video conferencing clients. The video conferencing server generates a video scene composition that includes the output multimedia stream of each video conferencing client of the plurality of video conferencing clients.

Such scene composition typically is an aggregation of all output multimedia streams of the respective video clients of the plurality of video conferencing clients.

The video scene composition consists on an overlay of each client's video stream on a canvas; each client video stream is resized and translated so as to fit in the screen simultaneously. Client streams can come from a variety of sources. The video scene composition is calculated every frame with available input frames; the composed video scene is itself a newly generated video stream including the multimedia streams of each multimedia client. Such generated video scene composition finally is forwarded to each multimedia client of the plurality of multimedia clients involved in a multimedia exchange session such as a video conferencing session.

Currently, such existing video conferencing system does not implement any stream highlighting at all and furthermore the only possibility /solution for prioritization of a multimedia stream included in the video scene composition is a user explicitly arranging sizes and positions of the different feeds called output multimedia streams, manually by means of a direct interaction with an input device such as mouse, keyboard, etc whereby the other feeds may be excluded from the video scene composition..

Hence such known video conferencing systems are disadvantageous in that no highlighting of a single output multimedia stream is possible without detrimentally affecting the further multimedia streams included in the video scene composition. Furthermore known video conferencing systems are disadvantageously in that the prioritizing of such a media stream of a plurality of media streams of a scene composition needs to be done manually.

An objective of the present invention is to provide a system for supporting video conferencing of the above known type but wherein the prioritizing of a media stream of a plurality of media streams included in a scene composition is automated in such manner that all output multimedia streams are incorporated in the video scene composition.

According to the invention, this object is achieved by the system as described in claim 1, the method as described in claim 7, the multimedia exchange server as described as described in claim 8,

Indeed by first analyzing each multimedia output stream of the plurality of multimedia output streams for detecting an event in each multimedia output stream, secondly assigning a high interest level to each multimedia output stream of the plurality of multimedia output streams wherein such event is detected and subsequently by adjusting the relevance of each stream of the plurality of streams included in the generated video scene composition based on the interest level assigned to each multimedia output stream the prioritizing of relevant streams is performed in an automated manner.

Each stream of the plurality of multimedia output streams is given a certain relevance within the entire video scene composition so that more relevant multimedia streams, i.e. multimedia output streams having an assigned high interest level are highlighted, and for less relevant multimedia streams, i.e. multimedia streams being assigned with a low interest level or no interest level at all, the occurrence of the multimedia stream is downgraded.

This highlighting may be performed by enlarging the rendering size of the meant multimedia stream, or positioning the steam more centrally in the video scene composition. Alternatively this can be done by increasing the audio low frequencies, thus creating a sensation of proximity, or increasing the sharpness of the stream image and e.g. blurring the other not high interest multimedia streams.

The downgrading of a multimedia stream that is assigned a low interest level or no interest level at all can be performed by decreasing the rendering size of the meant streams or positioning them more de-centrally.

Hence the various multimedia output streams of the multimedia client are prioritized in the generated scene composition in an automated manner so that a multimedia output stream representing a user/person in such multimedia communication starting to speak or attracting attention in another manner, obtains a higher priority within the scene composition then the other multimedia which results in a highlighted multimedia output stream compared to the other multimedia output streams of the plurality of multimedia output streams.

This analyzing of each multimedia output stream of the plurality of multimedia output streams may include the monitoring of the multimedia stream for the occurrence of e.g. voice activity and/or speech emotions included in the audio part of the multimedia output stream, for gestures made by a user included in the video part of the multimedia output stream detection or even user inputs like mouse or keyboard commands included in a control part of the multimedia output stream.

A further advantage of the system, method and related multimedia server of the present invention is that, apart from the automatic prioritizing of a media stream of a plurality of media streams included in a scene composition, the video scene composition still incorporates all multimedia output streams of the plurality of multimedia output streams where one or more streams are prioritized and the other streams are assigned with a lower priority but still are included in the video scene composition. And hence presenting full information on all respective users of the multimedia clients involved in a multimedia exchange like a video conferencing session.

Another characteristic feature of the present invention is described in claim 2 and claim 10.

The event to be detected is voice activity that is in the audio part of the multimedia output stream and assign a high interest level to said multimedia output stream if said voice activity is detected in said multimedia output stream.

Still another characteristic feature of the present invention is described in claim 3 and claim 11.

The event to be detected is the presence of gesture activity in each multimedia output stream and assign a high interest level to the multimedia output stream if such gesture activity is detected in the multimedia output stream. For instance if there was an open palm of a user of the media exchange system the hand of the user being a sign for attracting attention of the other users being an event for assigning a high interest level to the stream wherein the gesture was detected.

Still another characteristic feature of the present invention is described in claim 4 and claim 12.

The event to be detected is the is presence of speech emotions of speech included in each multimedia output stream and assign a high interest level to the multimedia output stream if speech emotions are detected in speech included in a multimedia output stream. For instance if there are emotions of speech included, being a sign for important things a user of the system is going to tell during a multimedia exchange like a video conference, this all being a sign for attracting attention of the other users. The detection of emotions in speech being an event for assigning a high interest level to the stream wherein the speech emotions were detected.

Still another characteristic feature of the present invention is described in claim 5 and claim 13.

The event to be detected is the presence of user inputs like mouse or keyboard commands included in a control part of the multimedia output stream and subsequently assign a high interest level to the multimedia output stream if presence of user inputs, like mouse or keyboard commands included in a control part of the multimedia output stream, are detected in the multimedia output stream. For instance such user inpu.may indicate a certain relevance for a multimedia output stream. This all being a sign for attracting attention of the other users being an event for assigning a high interest level to the stream wherein the user (control) inputs were detected.

A further Still another characteristic feature of the present invention is described in claim 6 and claim 14.

The scene composition part is adapted to modify a multimedia output stream in the video scene composition if the multimedia output stream has an assigned high interest level.

This modify/adjust/highlight a multimedia output stream being assigned a high interest level can be performed by increasing the rendering SIZE of the multimedia output stream with high interest level or by bringing this multimedia output stream to the center of the scene composition

Alternatively this can be done by increasing the audio low frequencies, thus creating a sensation of proximity, or increasing the sharpness of the stream image and e.g. blurring the other not high interest multimedia streams.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
FIG. 1 represents a functional representation of the multimedia exchange system wherein the implementation of the present invention is realized.
FIG. 2 represents the functional representation of the multimedia exchange server MS in the multimedia exchange system according to the present invention.

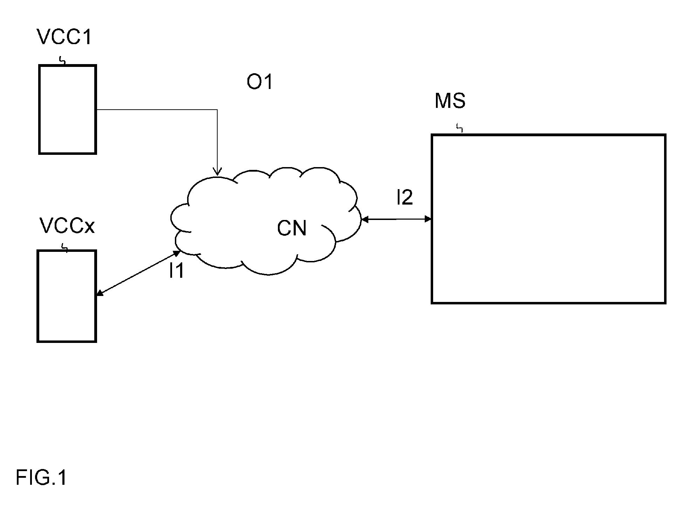

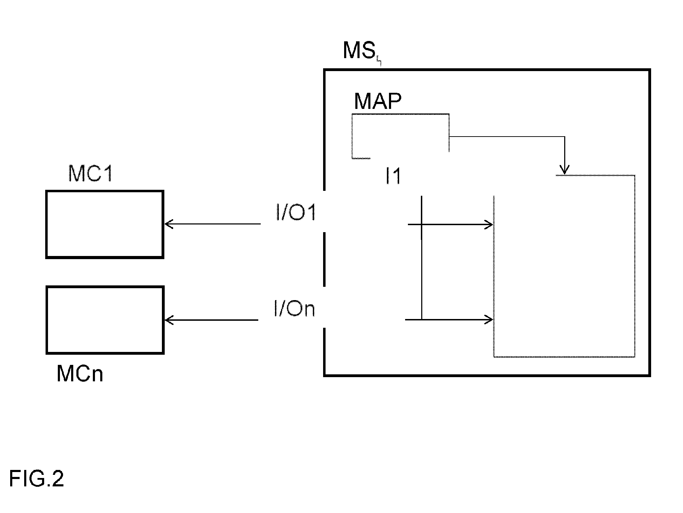

In the following paragraphs, referring to the drawings, an implementation of the method and the related devices according to the present invention will be described. In the first paragraph of this description the main elements of this network as presented in FIG. 1 and FIG.2 are described. In the second paragraph, all connections between the before mentioned network elements and described means are defined. In the succeeding paragraph the actual execution of the method for multimedia exchange is described.

First essential elements of the present invention are multimedia clients of a plurality of multimedia clients, each for instance being a video conferencing client like an internet connected computer terminal with keyboard mouse, additional camera included in the client device or connected to the client device, microphone and speakers.

Such multimedia client of the plurality of multimedia clients MC1- MCn generate multimedia output streams including video captured by the camera of the multimedia client, where the video includes image on the user of the corresponding multimedia client. The multimedia output streams further may include audio captured by the microphone coupled to or included in the multimedia client and user generated control signals where the audio includes voice of the user and user generated control signals e.g. being mouse or keyboard commands by coupled keyboard or mouse, having significance of control of the media scene composition or audio capabilities or internal state of the media pipeline or just to communicate with other users-like for instance sending meta information e.g. being a chat message.

A further essential element of this embodiment of the present invention is a multimedia exchange server MS that receives all multimedia output streams generated by multimedia clients of a plurality of multimedia clients MC1 - MCn, aggregates the generated multimedia output streams in a video scene composition, which video scene composition in turn is streamed back to each multimedia client of the plurality of multimedia clients MC1, ..,MCn.

The Multimedia exchange server MS includes a video scene composition part SCP that is able to generate a video scene composition by aggregating each multimedia output stream from the plurality of multimedia output streams where each of the multimedia output streams of the plurality of output streams is generated by a corresponding media client of the plurality of media clients. The video scene composition part SCP further is adapted to modify/adjust the relevance of each stream of said plurality of streams included in the scene composition based on the interest level that is assigned to each multimedia output stream of the plurality of multimedia output streams.

The multimedia exchange server MS further comprises a multimedia analysis part MAP that is able to analyze each multimedia output stream of the plurality of multimedia output streams for detecting an event in each of the multimedia output stream and additionally is able to assign a high interest level to a multimedia output stream of the plurality of multimedia output streams in case occurrence of such event in the multimedia output stream is detected.

Possible events that are to be detected are the presence of voice activity in a multimedia output stream and in case voice activity is detected a high interest level is to be assigned to a stream wherein the voice activity is detected. Further possible events are presence of gesture activity in a multimedia output stream, or presence of speech emotions of speech included in a multimedia output stream or even presence of user inputs included in (a control part) of a multimedia output stream.

The multimedia exchange server MS has an input/output-terminal I/O1, ... I/On that is at the same time an input-terminal of the video scene composition part SCP. The multimedia analysis part MAP also has an input-terminal that is coupled with an input/output-terminal I/O1,...,I/On of the multimedia exchange server. The scene composition part SCP in turn is coupled to the video scene composition part SCP. Each of the multimedia clients MC1, ..MCn are coupled to the multimedia exchange server over an XDSL access network and a core internet network and a further access network on the side of the multimedia exchange server. Alternatively each of the multimedia clients are coupled to the multimedia exchange server MS over any mobile or fixed connections such as ....

In order to explain the present invention it is assumed that there is a group of multimedia clients MC1, ..,MCn each with a corresponding user, that already have established a multimedia connection such as a video conferencing call. Each of the clients is equipped with a camera, a microphone a keyboard and/or mouse a coupled display and a set of speakers. Each of the multimedia clients MC1, ..,MCn generate a multimedia output stream that includes the video captured by the camera, and additionally may include sound like voice captured by the microphone and or control signals, being user generated control signals originating from the keyboard or mouse.

Hence the multimedia exchange server MS receives a plurality of multimedia output streams of the respective/corresponding coupled multimedia clients MC1,.MCn.

The multimedia exchange server by means of the video scene composition part SCP generates a video scene composition by aggregating each multimedia output stream of the plurality of multimedia output streams received. The video scene composition constituting an aggregated multimedia stream including the plurality of multimedia output streams being arranged in a certain way that all the users of the respective multimedia clients are incorporated in this video scene composition in a way that all user have a dedicated equal portion in the resulting presentation of the video scene composition at a user multimedia client.

The generated video scene composition including video image and audio of all users etc. is sent towards each of the multimedia clients and presented at a display of the respective client and audio corresponding to the video scene composition is played by speakers of each multimedia client MC1,..,MCn.

In order further to explain the advantages of the present invention it is assumed that user corresponding to multimedia client MCn starts speaking. Now, if the user belonging to multimedia client MCn starts speaking, it is important that the multimedia output stream from multimedia client MCn is prioritized within the video scene composition in order to highlight the current important role in a conversation like a video conference. Each of the output streams respectively generated by a multimedia client of the plurality of multimedia clients MC1,..,MCn are received at the scene composition part SCP of the multimedia server where the video scene composition is generated by aggregating each multimedia output stream from a plurality of multimedia output streams where each multimedia output stream of said plurality of output streams being generated by a corresponding media client of said plurality of media clients.

Additionally, each of the output streams that respectively are generated by a multimedia client of the plurality of multimedia clients MC1,..,MCn are received at the multimedia analysis part MPP of the multimedia server that subsequently analyzes each multimedia output stream of the plurality of multimedia output streams for detecting one of the following events: presence of speech by detecting presence of voice activity in each multimedia output stream, or presence of gesture activity, presence of speech emotions of speech included in a multimedia output stream or presence of user inputs included in said each multimedia output stream.

Therefore, the multimedia analysis part MPP runs: a Voice Activity Detection algorithm that continuously monitors an audio stream of each multimedia output streams. This algorithm produces a binary output YES/NO indicating if there is a person talking in the mentioned stream.
- A Gesture Detection algorithm monitoring a video component of each multimedia output stream, which algorithm produces an output YES/NO that indicates if there was an open palm of a hand in the mentioned stream.
- An Event Detection algorithm monitoring an control part of each multimedia output stream which algorithm produces an output YES/NO that indicates if the user produced a mouse click, and the associated coordinates.
- A Voice Emotion Recognition algorithm that monitors each multimedia output stream, the audio component, producing an output level 0-10 indicating the degree of excitement or interest of the person talking.

The multimedia analysis part MPP, furthermore is able to assign a high interest level to a multimedia output stream if voice activity, a gesture, speech emotions or a user input signal is detected in the multimedia output stream. Therefore, the multimedia analysis part MPP further may be able to execute a Prioritization Algorithm that assigns an interest level to each multimedia output streams by consolidating by means of a Prioritization Algorithm the results of the detected events in monitoring the multimedia output streams. The Prioritization Algorithm produces a per multimedia output stream an output Consolidated Interest Level being either HIGH or LOW), indicating simply if the multimedia output stream user has a high or a low interest level. In case there is a high interest level the multimedia output stream has a higher relevance and need to be highlighted or prioritized. The, per multimedia output stream Prioritization Algorithm may work according to the following logic:

If there is a Voice Activity Detected, OR there is a Gesture Detected, OR there is a user control signal and it is in the screen area associated to the current user ???, OR there is a Voice Emotion Recognition larger than 5 input, then assign a high interest level to the multimedia output stream, otherwise assign a low interest level or no level at all to such multimedia output stream.

In the current situation, however only speech in multimedia output stream corresponding to multimedia client MCn was detected, and consequently a high interest level is assigned to the multimedia output stream corresponding to multimedia client MCn by the multimedia analysis part MPP.

It is further assumed that only for the user corresponding to the multimedia client MCn presence of speech was detected so that the other multimedia output streams were assigned a low interest level or no interest level at all.

Subsequently, the scene composition part SCP further modify/adjusts the relevance of each stream of the plurality of streams included in the video scene composition based on the interest level assigned to each multimedia output stream. Hence the scene composition part SCP adjusts the relevance of the in multimedia output stream corresponding to multimedia client MCn as this multimedia output stream is assigned a high interest level by a - increase of 25% (in both width and height) of the rendering size of the streams with HIGH interest level input, while maintaining the center of each stream's rendering position. As only this stream is enlarged within the video scene composition this stream is prioritized in relation to the other streams included in the video scene composition.

In order to fit all multimedia output streams in the video scene composition, after the increase of 25% (in both width and height) of the rendering size of the streams with HIGH interest level, overlaps may occur due to the enlarged rendering of a high interest level streams. Any such overlaps resulting from the new size distribution are calculated and, the size of all input streams is reduced by say 10% .to fit them again in the video scene composition.

European Patent Application with reference 10306378.0 and title "Method and system for segmenting an image" discloses the segmenting of an image from a sequence of video images included in multimedia stream into a foreground and a background. Such a segmented foreground image as obtained using this method of European Patent Application with reference 10306378.0 can be applied as multimedia stream to be included in a video scene composition according to the present invention.

The content of European Patent Application with reference 10306378.0 is included by reference in the present application.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Multimedia exchange system for exchanging multimedia between multimedia clients of a plurality of multimedia clients (MC1,..,MCn) via a multimedia exchange server (MS), each multimedia client of a plurality of multimedia clients (MC1,..,MCn) being coupled to said multimedia server (MS), each multimedia client of said plurality of multimedia clients generating a multimedia output stream, said Multimedia exchange system comprising:
a. a video scene composition part (SCP), adapted to generate a video scene composition by aggregating each multimedia output stream from a plurality of multimedia output streams, each multimedia output stream of said plurality of output streams being generated by a corresponding media client of said plurality of media clients (MC1,..,MCn), **CHARACTERISED IN THAT** said multimedia system further comprises:
b. a multimedia analysis part (MPP), adapted to analyze each multimedia output stream of said plurality of multimedia output streams for detecting an event in each said multimedia output stream and adapted to assign a high interest level to said multimedia output stream of said plurality of multimedia output streams in case of occurrence of said event in said multimedia output stream;
and **in that** said scene composition part (SCP) further is adapted to modify the relevance of each stream of said plurality of streams included in said scene composition based on said interest level assigned to each multimedia output stream of said plurality of multimedia output streams.

2. Multimedia exchange system for exchanging multimedia according to claim 1, **CHARACTERISED IN THAT** said event to be detected is presence of voice activity in said each multimedia output stream and assign a high interest level to said multimedia output stream if said voice activity is detected in said multimedia output stream.

3. Multimedia exchange system for exchanging multimedia according to claim 1 or claim 2, **CHARACTERISED IN THAT** said event to be detected is presence of gesture activity in said each multimedia output stream and assign a high interest level to said multimedia output stream if said gesture activity is detected in said multimedia output stream.

4. Multimedia exchange system for exchanging multimedia according to any of claim 1 to 3, **CHARACTERISED IN THAT** said event to be detected is presence of speech emotions of speech included in said each multimedia output stream and assign a high interest level to said multimedia output stream if speech emotions are detected in said multimedia output stream.

5. Multimedia exchange system for exchanging multimedia according to any of claims 1 to 4, **CHARACTERISED IN** said event to be detected is presence of user inputs included in said each multimedia output stream and assign a high interest level to said multimedia output stream if user inputs are detected in said multimedia output stream.

6. Multimedia exchange system for exchanging multimedia according to any of claims 1 to 5, **CHARACTERISED IN THAT** said scene composition part (SCP) is adapted to modify a multimedia output stream in said scene composition if said multimedia output stream has an assigned high interest level.

7. Multimedia exchange method for exchanging multimedia between multimedia clients of a plurality of multimedia clients via a multimedia server, each multimedia client of a plurality of multimedia clients being coupled to said multimedia server, each multimedia client of said plurality of multimedia clients generating a multimedia output stream, said Multimedia exchange method comprising the steps of:
a. generating a video scene composition by aggregating each multimedia output stream from a plurality of multimedia output streams, each multimedia output stream of said plurality of output streams being generated by a corresponding media client of said plurality of media clients, **CHARACTERISED IN THAT** said multimedia exchange method further comprising the steps of:
b. analyzing each multimedia output stream of said plurality of multimedia output streams for detecting an event in each said multimedia output stream and assigning a high interest level to said multimedia output stream of said plurality of multimedia output streams in case of occurrence of said event in said multimedia output stream;
and modifying the relevance of each stream of said plurality of streams included in said scene composition based on said interest level assigned to each multimedia output stream of said plurality of multimedia output streams.

8. Multimedia exchange server (MS) for exchanging multimedia between multimedia clients of a plurality of multimedia clients via said multimedia server, each multimedia client of said plurality of multimedia clients being coupled to said multimedia server, each multimedia client of said plurality of multimedia clients generating a multimedia output (stream), said Multimedia exchange server (MS)comprising:
a. a "scene composition part (SCP), adapted to generate a scene composition by aggregating each multimedia output stream from a plurality of multimedia output streams, each multimedia output stream of said plurality of output streams being generated by a corresponding media client of said plurality of media clients, **CHARACTERISED IN THAT** said multimedia server further comprises:
b. a multimedia analysis part (MPP), adapted to analyze each multimedia output stream of said plurality of multimedia output streams for detecting an event in each said multimedia output stream and adapted to assign a high interest level to said multimedia output stream of said plurality of multimedia output streams in case of occurrence of said event in said multimedia output stream;
and **in that** said scene composition part (SCP) further is adapted to modify the relevance of each stream of said plurality of streams included in said scene composition based on said interest level assigned to each multimedia output stream of said plurality of multimedia output streams.

9. Multimedia exchange server (MS) according to claim 8, **CHARACTERISED IN THAT** said event to be detected is presence of voice activity in said each multimedia output stream and assign a high interest level to said multimedia output stream if said voice activity is detected in said multimedia output stream.

10. Multimedia exchange server (MS) according to claim 8 or claim 9, **CHARACTERISED IN THAT** said event to be detected is presence of gesture activity in said each multimedia output stream and assign a high interest level to said multimedia output stream if said gesture activity is detected in said multimedia output stream.

11. Multimedia exchange server (MS) according to any of claim 8 to claim 10, **CHARACTERISED IN THAT** said event to be detected is presence of speech emotions of speech included in said each multimedia output stream and assign a high interest level to said multimedia output stream if speech emotions are detected in said multimedia output stream.

12. Multimedia exchange server (MS) according to any of claims 8 to 11, **CHARACTERISED IN** said event to be detected is presence of user inputs included in said each multimedia output stream and assign a high interest level to said multimedia output stream if user inputs are detected in said multimedia output stream.

13. Multimedia exchange server (MS) according to any of claims 8 to 12, **CHARACTERISED IN THAT** said scene composition part (SCP) is adapted to modify a multimedia output stream in said scene composition if said multimedia output stream has an assigned high interest level.
